# EUROPEAN PATENT APPLICATION

(11) **EP 4 778 892 A1**
(43) Date of publication of application: **22.07.2026**
(21) Application number: 25382024.5
(22) Date of filing: 17.01.2025
(51) Int. Cl.: C02F 1/461, C02F 1/467, C25B 11/02, C25B 11/065, C25B 11/091, C02F 101/30, C02F 101/34

(54) **NI-MN LDH ELECTRODES FOR ORGANIC POLLUTANT DEGRADATION IN WASTEWATER**

(71) Applicant: Universitat de València, 46010 Valencia (ES); Fundación IMDEA Energía, 28935 Móstoles (Madrid) (ES); Matteco Team S.L., 46988 Paterna (Valencia) (ES)
(72) Inventor: Mirehbar, Seyedkeyvan, Móstoles (Madrid) (ES); Seijas Da Silva, Alvaro, Valencia (ES); Jaramillo Hernández, Camilo Andrés, Valencia (ES); Lado Garrido, Julio J., Móstoles (Madrid) (ES); Abellán Sáez, Gonzalo, Valencia (ES); Palma del Val, Francisco Jesús, Móstoles (Madrid) (ES)
(74) Representative: Pons IP

(57) **Abstract**

The present invention relates to the field of water treatment technologies, specifically to the development of electrochemical electrodes for the removal and degradation of organic pollutants from water. The invention particularly focuses on the use of nickel-manganese layered double hydroxide (NiMn-LDH) electrodes, modified with various carbon materials and supported on a graphite felt substrate, to enhance the efficiency and effectiveness of electrochemical oxidation processes in water purification.

## Description

The present invention relates to the field of water treatment technologies, specifically to the development of electrochemical electrodes for the removal and degradation of organic pollutants from water. The invention particularly focuses on the use of nickel-manganese layered double hydroxide (NiMn-LDH) electrodes, modified with various carbon materials and supported on a graphite felt substrate, to enhance the efficiency and effectiveness of electrochemical oxidation processes in water purification.

### BACKGROUND ART

The presence of organic pollutants in water sources represents a critical environmental and public health issue. These pollutants arise from diverse origins, including industrial discharges, agricultural runoff, pharmaceutical residues, and municipal wastewater. Common organic contaminants such as pesticides, pharmaceuticals, endocrine-disrupting compounds, and industrial chemicals are of particular concern. When introduced into water sources, these pollutants pose significant risks to both ecosystems and human health. Exposure to contaminated drinking water has been linked to a range of adverse health outcomes, including carcinogenesis, endocrine disruption, reproductive and developmental issues, neurological disorders, and other chronic health conditions. The persistence and bioaccumulative nature of these compounds necessitate the development of effective water treatment technologies capable of not only removing but also degrading these harmful substances to prevent their long-term impact. [A. Mandal, P. Senthil Kumar, C. S. Poorva, L. Srinivasa Raju, S. R. Balasubramani, and G. Rangasamy, "Research progress of persistent organic pollutants in water: classification, sources, potential risks, and treatment approaches," Water Pract. Technol., vol. 19, no. 3, pp. 937-959, Mar. 2024, doi: 10.2166/wpt.2024.031.].

Traditional water treatment methods-including physical processes like filtration and sedimentation, chemical methods such as chlorination and ozonation, and biological treatments like activated sludge-have demonstrated limited effectiveness in fully removing or degrading organic pollutants. [ G. Crini and E. Lichtfouse, "Advantages and disadvantages of techniques used for wastewater treatment," Environ. Chem. Lett., vol. 17, no. 1, pp. 145-155, Mar. 2019, doi: 10.1007/s10311-018-0785-9] These methods primarily focus on separating contaminants from water rather than achieving complete mineralization, which can lead to the persistence of pollutants or the formation of harmful byproducts. The shortcomings of these conventional approaches underscore the need for more advanced treatment technologies.

Electrochemical Advanced Oxidation Processes (EAOPs) have emerged as a promising alternative for the degradation of organic pollutants in water. EAOPs operate by generating highly reactive species, such as hydroxyl radicals, at the surface of an electrode. These radicals are capable of breaking down a wide spectrum of organic contaminants into less harmful substances or fully mineralizing them to carbon dioxide and water. However, the effectiveness of EAOPs is often limited by poor mass transport of organic pollutants to the reactive vicinity of the electrode. This results in inefficient electrochemical oxidation, with much of the electrode area and electrical energy being expended on the electrolysis of water rather than the oxidation of contaminants. Given that oxidation occurs only at the electrode surface, the low concentration of pollutants in water (often in the parts-per-million range) requires that these species be within nanometers of the electrode to undergo oxidation. Moreover, hydroxyl radicals, despite their crucial role in oxidation, have an extremely short lifespan and reactive range, limiting their effectiveness in real-world applications. [ J. Radjenovic and D. L. Sedlak, "Challenges and Opportunities for Electrochemical Processes as Next-Generation Technologies for the Treatment of Contaminated Water," Environ. Sci. Technol., vol. 49, no. 19, pp. 11292-11302, Oct. 2015, doi: 10.1021/acs.est.5b02414].

In commercial electrochemical reactors, the efficiency of organic oxidation is typically less than 15% at pollutant concentrations ranging from 200 mg/L to trace levels. Although reducing the current density can somewhat improve current efficiency at higher pollutant concentrations (e.g., 1000 mg/L), this approach offers only marginal gains-a tenfold reduction in current density results in just a 5% increase in efficiency, which is still below 20%, and entails significant increases in capital costs. These challenges highlight the critical importance of electrode material selection in improving the efficiency and economic viability of EAOPs.

Several electrode materials have been investigated for their potential to enhance the degradation of organic pollutants, each offering distinct advantages and limitations. Boron-Doped Diamond (BDD) electrodes are among the most advanced options in EAOPs. Known for their exceptional chemical and electrochemical stability, BDD electrodes possess a high overpotential for oxygen evolution and effectively generate hydroxyl radicals, making them highly efficient for organic pollutant degradation. Electrodes are typically produced using chemical vapor deposition (CVD) techniques. However, the CVD process is inherently slow and expensive, leading to low production rates and high costs. Additionally, producing high-surface-area BDD electrodes is challenging, necessitating the use of numerous expensive electrodes to meet treatment objectives. The high production costs and the relatively brittle nature of diamond materials have limited the widespread adoption of BDD electrodes in commercial water treatment applications. [S. J. Cobb, Z. J. Ayres, and J. V. Macpherson, "Boron Doped Diamond: A Designer Electrode Material for the Twenty-First Century," Annu. Rev. Anal. Chem., vol. 11, no. 1, pp. 463-484, Jun. 2018].

Dimensionally Stable Anodes (DSA) represent another significant development in electrochemical oxidation technology. DSAs have become widely used in industrial processes, including chlor-alkali production and wastewater treatment. DSAs are characterized by their robust structure, long operational lifespan, and high efficiency in generating reactive oxygen species for pollutant degradation. Typically composed of a titanium substrate coated with mixed metal oxides (MMOs) such as ruthenium oxide (RuOz), iridium oxide (IrOz), or other platinum group metals, DSAs offer excellent catalytic activity and corrosion resistance, making them suitable for long-term operation in harsh electrochemical environments. In water treatment, DSAs have demonstrated good performance in terms of pollutant degradation rates and energy efficiency. However, DSAs also face challenges, including the potential for catalyst deactivation and the formation of chlorinated byproducts in chloride-containing waters. Moreover, the metals used in DSAs, such as ruthenium and iridium, are not only expensive but also toxic, raising environmental and safety concerns regarding their use and disposal. [G. R. Pointer Malpass and A. de Jesus Motheo, "Recent advances on the use of active anodes in environmental electrochemistry," Curr. Opin. Electrochem., vol. 27, p. 100689, Jun. 2021].

Ti₄O₇ electrodes have emerged as a comparable alternative to BDD electrodes in terms of organic compound oxidation efficiency. These electrodes can be synthesized at much lower costs, primarily due to their much higher specific surface area compared to BDD electrodes. The high specific surface area of porous Ti₄O₇ electrodes enhances the availability of active sites for oxidation reactions, thereby improving overall treatment efficiency. Various synthesis techniques allow for the formation of high-surface-area Ti₄O₇ structures more cost-effectively than the CVD methods used for BDD production. As a result, Ti₄O₇ electrodes represent a promising alternative to BDD and DSA electrodes from both a technical and economic standpoint, potentially offering a more viable solution for electrochemical oxidation processes in water treatment applications. [H. Wang et al., "Comparison of Ti/Ti4O7, Ti/Ti4O7-PbO2-Ce, and Ti/Ti4O7 nanotube array anodes for electro-oxidation of p-nitrophenol and real wastewater," Sep. Purif. Technol., vol. 266, p. 118600, Jul. 2021].

Therefore, existing technologies for the treatment of contaminated water, such as advanced filtration processes, chemical oxidation, and biological treatments, face several significant limitations and problems in terms of cost, efficiency, and the ability to fully degrade these contaminants. Specifically, many of these methods fail to fully decompose complex organic compounds and can generate potentially toxic byproducts or require a large amount of energy.

As previously indicated, alternatives such as boron-doped diamond electrodes, dimensionally stable anodes or titanium oxides offer certain advantages in generating reactive species for contaminant degradation but are costly to implement and often require high current densities, which increases energy consumption.

### SUMMARY OF THE INVENTION

The present invention discloses a group of novel advanced materials based on lamellar double hydroxides of nickel and manganese (NiMn-LDH) modified with carbon additives such as carbon nanotubes (CNT). These materials, deposited on a substrate, are capable of carrying out electrochemical oxidation processes for the removal of organic pollutants from water.

Utilizing nickel-manganese double hydroxides (NiMn-LDH) with carbon additives that exhibit a technical effect on their electrocatalytic behavior and stability allows their use in an innovative electrode design that facilitates the efficient generation and utilization of hydroxyl radicals for the electrochemical oxidation of pollutants. This synergistic effect is particularly advantageous as it allows the electrode system to operate efficiently at very low current densities, significantly reducing energy consumption compared to existing technologies. This ability to operate at low current densities not only improves the sustainability of the treatment process, but also extends electrode life and reduces operating and maintenance costs. Additionally, this hydroxide-based technology allows syntheses to be performed at room temperature, in contrast to oxide-based solutions.

This approach provides a greener and economically viable solution for wastewater treatment, addressing the challenge of degrading complex organic pollutants efficiently without compromising environmental safety or economic viability.

A first aspect of the present invention related to an electrocatalytic material characterized in that it comprises:
- a conductive carbon material as a support;
- a nickel-manganese layered double hydroxide deposited homogeneously over the support;
   wherein the amount of conductive carbon material is between 10% and 15% in weight with respect to the nickel-manganese layered double hydroxide;
   and wherein the ratio of nickel with respect the manganese in the layered double hydroxide is between 2.5:1 and 4:1, preferably 2.8:1 and 3.2:1.

NiMn-LDH is distinguished by the variable oxidation states of both nickel and manganese. Nickel cycles between Ni²⁺ and Ni³⁺, while manganese can transition between Mn²⁺, Mn³⁺, and Mn⁴⁺ states. This multiplicity of redox states makes NiMn-LDH a highly effective material for electrochemical applications where charge transfer processes dominate. These different oxidation states allow the material to store and release electrons through Faradaic processes, where Ni²⁺/Ni³⁺ and Mn²⁺/Mn³⁺/Mn⁴⁺ undergo reversible redox reactions. This ability to participate in multiple electron transfers makes NiMn-LDH an ideal candidate for different applications such as electrocatalytic processes. The synergistic interaction between the oxidation states of Ni and Mn significantly enhances the generation of hydroxyl radicals, facilitating the effective removal of pollutants from wastewater. Ni²⁺/Ni³⁺ transitions are central to the electrocatalytic performance, providing active sites for the adsorption and desorption of oxygen-containing intermediates, such as *OH, *O, and *OOH. Mn oxidation states, particularly Mn³⁺ and Mn⁴ providing additional pathways for oxygen intermediates and improving the electron density around the Ni active sites. The multivalent nature of Mn also allows it to stabilize the catalyst during prolonged reactions, improving durability and resistance to catalyst degradation. This cooperative redox mechanism, where manganese stabilizes nickel in higher oxidation states and enhances the material's overall redox capacity, makes NiMn-LDH highly effective as an electrode material. Furthermore, NiMn-LDH can accommodate ions within its layers, improving ion diffusion rates.

Carbon materials such as graphene, reduced graphene oxide (rGO), and carbon nanotubes (CNTs) provide conductive networks that facilitate electron transfer, thereby improving the overall efficiency of the material. According to all that has been discussed regarding the electrochemical properties, redox activity, and structural advantages of NiMn-LDH, particularly its enhanced performance when combined with carbon materials like graphene and carbon nanotubes.

The term "conductive carbon material" as used herein refers to carbon-based materials with high electrical conductivity, which are used to facilitate electron transfer in various applications. These materials may include, but are not limited to CNTs, graphene, rGO, carbon black, activated carbon, carbon fibers, carbon nano-onions, carbon dots and mesoporous carbon.

The term "homogeneously" as used herein refers to a uniform and consistent distribution of the NiMn-LDH material across the entire surface of the support.

In a preferred embodiment of the present invention the conductive carbon material is selected from CNTs, graphene, rGO, carbon black, activated carbon, carbon fibers, carbon nano-onions, carbon dots and mesoporous carbon, CNTs with carboxymethyl cellulose (CMC). In a more preferred embodiment, the conductive carbon material is CNTs.

CNTs provide a similar advantage by acting as conductive backbones that support the NiMn-LDH nanosheets. The incorporation of CNTs enhances the overall conductivity and rate capability of the material, enabling it to perform better at higher current densities. NiMn-LDH with carbon nanotubes as a support composites have demonstrated a significantly improves in the conductivity of the material and the available active surface area, resulting in higher efficiency compared to conventional materials.

A second aspect of the present invention is a process to obtain an electrocatalytic material described above characterized in that it comprises the following steps:
a) mixing a conductive carbon material with a 1.2 w/V% to 6 w/V% of H₂O₂ 30% solution;
b) oxidizing the mixture obtained in step (a), filtering and drying the oxidized conductive carbon material obtained;
c) mixing in a solution of methanol, preferably dry methanol, the metal precursors of Ni and Mn in a stoichiometric ratio of between 2.5:1 and 4:1 respect to Ni:Mn and then adding the oxidized conductive carbon material obtained in step (b) wherein the ratio of oxidized conductive carbon material is between 1:6 and 1:8 with respect to the nickel-manganese;
d) preparing a NaOH solution in methanol with a concentration ranging from 0.1 M to 6 M and adding it slowly to the mixture, preferably by dropwise technique, obtained in step (c) over a period of 2 to 100 minutes, followed by stirring the mixture for a minimum of 48 hours and the obtained dispersion is filtering; and
e) drying the powder obtained in step (d), preferably in a temperature of between 15 °C and 80 °C.

The use of methanol in step (c) is a critical parameter to prevent the oxidation of manganese during the formation process, and it is even better with dry methanol. In addition, the slow addition of the hydroxide solution during step (d) is crucial to prevent manganese oxidation.

In preferred embodiment the conductive carbon material is selected from CNTs, graphene, rGO, carbon black, activated carbon, carbon fibers, carbon nano-onions, carbon dots and mesoporous carbon, CNTs with CMC, preferably the conductive carbon material is CNTs.

In another preferred embodiment the oxidizing of step (b) is a treatment using a microwave furnace at 450 W during 6 minutes.

In another preferred embodiment the metal precursors of step (c) are Ni and Mn is in a stoichiometric ratio of between 2.8:1 and 3.2:1, preferably the precursor are halide salts, nitrate salts, sulfate salts.

In another preferred embodiment the ratio of oxidized conductive carbon material with respect to the nickel-manganese and the ratio of nickel-manganese is between 1:6.8 and 1:7.8.

A third aspect of the present invention is an electrocatalytic device characterized in that it comprises:
- an electrocatalytic material according to electrocatalytic material described above deposited on a graphite felt (GF) configured to act as an anode or negative electrode defined as GF/NiMn-LDH.

In the present invention the electrocatalytic device may include, but are not limited to, a stainless-steel (SS) sheet as the cathode and an aqueous supporting electrolyte.

The enhanced performance of the GF/NiMn-LDH with conductive carbon material configured as a support composite can be attributed to the synergistic effects of the CNTs and NiMn-LDH. CNTs provide a highly conductive network that facilitates efficient electron transfer, enhancing the electrocatalytic activity of the NiMn-LDH. Additionally, the high surface area and the mesoporous structure of the CNTs increase the available active sites for phenol adsorption and degradation. This combination results in a more effective and faster removal of organic pollutants, as demonstrated in the experiments, underscoring the potential of GF/NiMn-LDH-CNT as an advanced electrode material for wastewater treatment applications.

A fourth aspect of the present invention is a process for obtainment of an electrocatalytic material deposited on a graphite felt characterized in that it comprises the following steps:
i. cleaning a graphite felt;
ii. increasing the surface tension of the cleaned graphite felt obtained in step (i);
iii. oxidizing the graphite felt obtained in step (ii);
iv. impregnating the oxidated graphite felt obtained in step (iii), with the metal salts precursors of Ni and Mn in a stoichiometric ratio of between 2.5:1 and 4:1, preferably metal salt precursors are selected from halide salts, nitrate salts, sulfate salts, and optionally further adding a conductive carbon material;
v. adding the precipitating agent to the mixture obtained in step (iv) in an amount of at least 2 times the stoichiometric amount of the metals present in the mixture, preferably the precipitation agent is selected from NaOH and Glycidol;
vi. rinsing of excess powder obtained in step (v) with at least twice a volume of polar solvent, preferably water, with respect to the total volume obtained in step (v) and drying, preferably in a temperature of between 15 °C and 80 °C.

In stage (iv) the carbon conductive material is optionally added because it is observed that a carbon conductive layer appears as a support from the procedure carried out in stages (i) to (iv) with the graphite felt without the additional addition of such material in stage iv, obtaining an improved conductivity, nevertheless it also works and such layer appears if said conductive carbon material is added additionally during stage iv, although the conductivity is slightly lower than the most optimal one obtained without the addition of the material.

In a preferably embodiment the cleaning of step (i) is by washing with a polar solvent selected from methanol or acetone.

In another preferred embodiment increasing the surface tension of step (ii) is carried out by a corona treatment.

In another preferred embodiment the oxidizing of step (iii) is carried out by immersing in H₂O₂ and irradiating for 3-6 minutes at 450W in a microwave.

A fifth aspect of the present invention is the use of the electrocatalytic material described above or the electrode described above, as an anode in an electrochemical oxidation process of wastewater for the removal and degradation of their organic pollutants.

A preferred embodiment of the use of the electrode described above in wastewater treatment applications, preferably in the electrochemical oxidation of phenol in water.

A sixth aspect of the present invention is a method for wastewater treatment characterized in that it comprises the following steps:
1) contacting the electrochemical device described above in a medium comprising waste water;
2) applying a current density of between 5 and 20 mA·cm²;
3) sampling of the water to be treated for intervals between 2.5 and 20 min;
4) analyzing the evolution of the samples of step (3) of the phenol concentration and the chemical oxygen demand (COD); and
5) optionally cleaning by keeping the device and the anode immersed in milliQ water for at least 1 h.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

### BRIEF DESCRIPTION OF THE DRAWINGS

**Fig. 1****.** XRD patterns of different synthesized NiMn-LDHs.
**Fig. 2****.** Raman spectra of different synthesized NiMn-LDHs with carbon nanotubes.
**Fig. 3****.** XRD patterns of different synthesized NiMn-LDHs.
**Fig. 4****.** N₂ adsorption-desorption isotherms of different NiMn-LDHs.
**Fig. 5****.** SEM images of different NiMn-LDH-CNT electrode at various magnifications (25,000x, 30,000x, and 100,000x) and mapping of the different elements and Energy-Dispersive X-ray Spectroscopy (EDS) data of the selected area.
**Fig. 6****.** TEM images of NiMn-LDH-CNT nanocomposite and Energy-Dispersive X-ray Spectroscopy (EDS) data of the selected area.
**Fig. 7****.** Comparison of electroactive response of NiMn-LDH and NiMn-LDH-CNT
**Fig. 8****.** Comparison of phenol degradation using anodes with different active materials.
**Fig. 9****.** Electrode's potential for repeated use in water purification processes.

### Examples

### Example 1

### Protocol for obtainment of NiMn-LDHs with CNTs

### Preparation of NiMn-LDH with CNTs Samples

Two types of CNTs were used in this study: Tuball CNTs stabilized with CMC and commercially available CNTs from Sigma-Aldrich. Both types underwent an oxidation treatment using a microwave furnace, during which the CNTs were mixed with a 60 g/L H₂O₂ solution. Following the oxidation, the CNTs were filtered and dried for subsequent use.

For the preparation of NiMn-LDH with CNTs, the CNTs were introduced into the metal solution before the addition of NaOH, allowing the CNTs to interact with the metal precursors for a period of 1 to 24 hours. The NaOH solution was then slowly added over 2 to 3 minutes, and the mixture was stirred for 48 hours. In these samples, the metal-to-CNT ratio was maintained at 7:1.

### Example 2. Electrode preparation.

### Preparation of NiMn-LDH with CNTs on Carbon Felt

To obtain NiMn-LDH with CNTs directly on a carbon felt collector, a series of pretreatments were applied to the carbon felt. First, the felt was cleaned with methanol or acetone to remove surface polymers. Next, it underwent a corona treatment. Finally, the carbon felt was oxidized using a microwave process, where it was immersed in H₂O₂ and irradiated for 6 minutes at 400W. After oxidation, the carbon felt was soaked in a metal solution for at least 2 hours, then the precipitation agent (NaOH or Glycidol) was added, and after 24 hours, the substrate with the catalyst layer was cleaned to remove any excess powder and subsequently dried.

### Example 3: Comparative examples

### Synthesis of NiMn-LDH Powder

NiMn-LDH was synthesized using an alkoxide method. A 40 mM solution of metals (30 mM Ni and 10 mM Mn) was prepared in methanol, and separately, a 1 M NaOH solution was prepared in methanol as well. The NaOH solution was gradually added to the metal solution over a period of 2 to 3 minutes, followed by continuous stirring for 48 hours.

NiMn-LDH-Tris: NiMn-Tris LDH with a Ni/Mn = 3:1 ratio was synthesized using a modified hydrothermal method published by Kuroda et al. The chloride salts of the metals (NiCl₂·6H₂O and MnCl₂·4H₂O) were dissolved in 80 mL of Milli-Q water together with tris(hydroxymethyl) amino-methane (0.5 M) in order to reach a total metal cation concentration of 0.05 M with a Ni/Mn 3:1 stoichiometric ratio. Afterwards, the mixture was set up at different pH by the addition of a 1 M NaOH solution. Then the resulting solution was mixed and transferred to a Teflon-lined stainless-steel autoclave. The autoclave was placed in a preheated oven at 180 °C for 24 h. Finally, it was cooled to room temperature, and the final brown powder was centrifugated and washed with H₂O and EtOH several times and dried for 24 h in vacuum.

### Synthesis of NiMn-LDH on Pretreated Carbon Felt

Two synthetic routes were employed to grow NiMn-LDH on the pretreated graphite felt (SGL CARBON: Thermally activated graphite felt GFD 4.6.)

Alkoxide Synthesis: A 40 mM solution of metals (30 mM Ni and 10 mM Mn) was prepared in methanol, and a 1 M NaOH solution was prepared separately in methanol. The NaOH solution was slowly added to the metal solution over 2 to 3 minutes, followed by stirring for 48 hours.

Epoxide Route: A metal solution with the same concentrations (30 mM Ni and 10 mM Mn) was prepared in water with a pH lower than 3 and a high NaCl concentration. An epoxide was then added to initiate the reaction, and the mixture was stirred for 48 hours.

### Example 4. Characterization structural

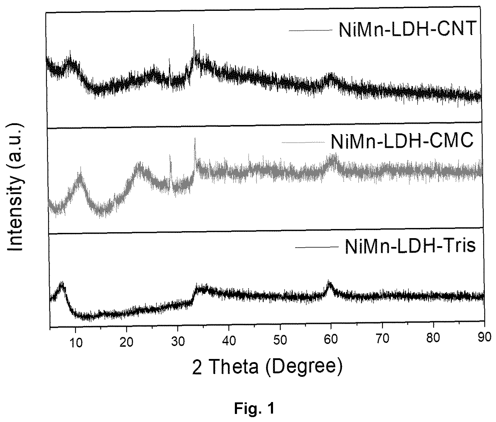

The X-ray diffraction (XRD) analysis results for these materials are presented in **Figure 1****.** The XRD results for NiMn-LDHs typically reveal the characteristic layered structure of LDHs, with reflections corresponding to the brucite-like layers of metal hydroxides. The XRD patterns commonly show sharp peaks at low angles, representing the (003), (006), and (009) planes, which are indicative of the ordered stacking of the hydroxide layers. The interlayer spacing between these planes, often calculated from the (003) reflection, provides insights into the intercalation of anions and the overall layer thickness. The presence of Ni and Mn within the layers usually does not significantly shift the basal reflections compared to other LDHs, but additional peaks at higher angles, corresponding to metal oxides or hydroxides, might appear depending on the degree of crystallinity and the presence of impurities or secondary phases. In composites where NiMn-LDH is coupled with materials like graphene or rGO, the XRD results often show broadened peaks, indicating a reduction in the crystallite size or layer order due to the exfoliation of the LDH sheets or the interaction with the carbon matrix. These XRD characteristics are essential for confirming the successful synthesis of NiMn-LDH and for understanding how structural modifications affect its electrochemical performance.

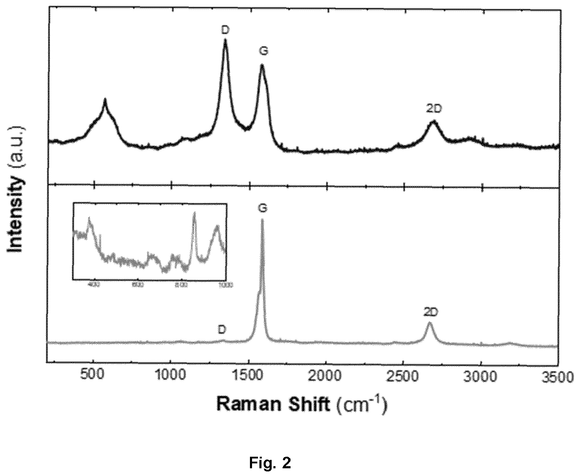

Raman spectroscopy was conducted on the samples NiMn-LDH-CMC and NiMn-LDH-CNT, as shown in **Figure 2****.** In both samples, low-frequency vibrations corresponding to the metal-oxygen (M-O) signals were observed. These signals are related to the presence of both Ni-O and Mn-O. Additionally, signals around 1250, 1600, and 2750 cm⁻¹ are observed, which correspond to the D, G, and 2D bands associated with carbon-based nanostructures. The D band, located around 1250-1300 cm⁻¹ is associated with the defects or the disorder in the carbon lattice. The G band, around 1550-1600 cm⁻¹ represents the in-plane vibrations of sp₂ carbon atoms, and represents the graphiticity of the structure. Finally, the 2D band, which is observed c.a. 2500-2800 cm⁻¹ is a second-order resonance of the D band and its really sensitive to the number of layers in the material. A strong 2D signal is characteristic for single layered graphene, while it's broadening suggest the presence of more layers. For the NiMn-LDH-CMC sample, a significant difference between the intensities of the D and G bands indicates that the pre-treatment process did not result in oxidation, thereby preserving the graphitic structure of the material. In contrast, for the NiMn-LDH-CNT sample, the increased intensity of the D band suggests that the oxidation pre-treatment was effective. This increase in the D band indicates a higher level of defects in the carbon component, consistent with the successful modification of the nanotubes through oxidation. For both samples the 2D peak behaves similar, suggesting a few-layer conformation of nanotubes.

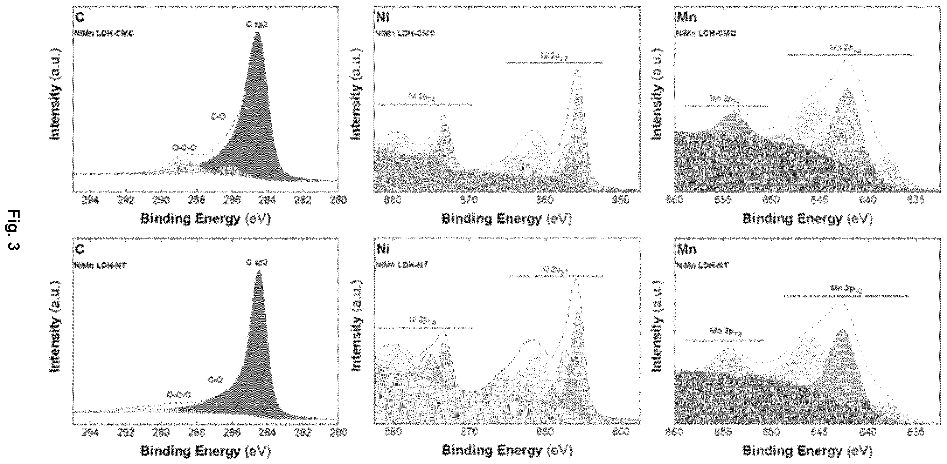

Additionally, X-ray Photoelectron Spectroscopy (XPS) was performed on the NiMn-LDH-CMC and NiMn-LDH-CNT samples. The resulting spectra were deconvoluted for carbon, nickel and manganese as depict in **Figure 3**. For the Carbon the spectrum shows signals at 284 eV which corresponds to the C sp2, which predominate, exhibiting the predomination of graphitic carbon on the surface. However, C-O and O-C-O signals are also observed. For the metallic environments, the spectrum of Ni exhibits a typical behaviour of Ni" while for Mn, the spectrum suggests the presence of both Mn" and Mn^{III}.

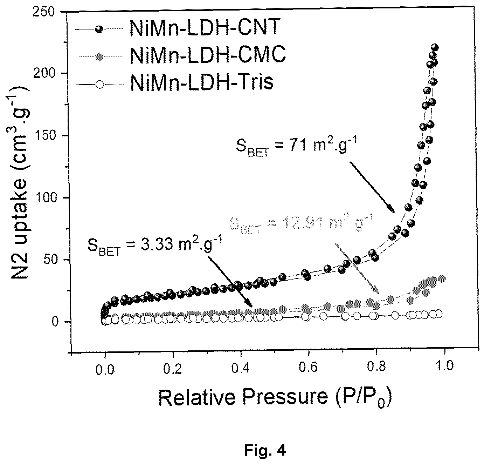

The nitrogen adsorption-desorption isotherms depicted in **Figure 4** provide insights into the surface properties of three different NiMn-LDH samples, showcasing their specific surface areas (S_{BET}). The isotherms follow a Type IV curve with H3 hysteresis loops, which are typical for mesoporous materials. These loops suggest that the materials possess slit-shaped pores formed by the aggregation of plate-like particles, common in layered materials like LDHs.

The sample represented by the blue curve (NiMn-LDH-CNT) exhibits a significantly higher specific surface area (S_{BET} = 71 m² g⁻¹) compared to the other two, indicated by the grey (S_{BET} = 12.91 m² g⁻¹) and white (3.33 m² g⁻¹) curves. This increased surface area can be attributed to a more open pore structure or smaller, more tightly packed nanosheets, which enhance the accessibility of active sites for adsorption processes. A higher surface area is generally advantageous for catalytic applications, including the electrocatalytic oxidation of organic pollutants in water treatment, as it allows for more extensive interaction between the catalyst and contaminants. Thus, the sample with a surface area of 71 m² g⁻¹ (NiMn-LDH-CNT) is expected to exhibit superior performance in applications requiring high surface reactivity.

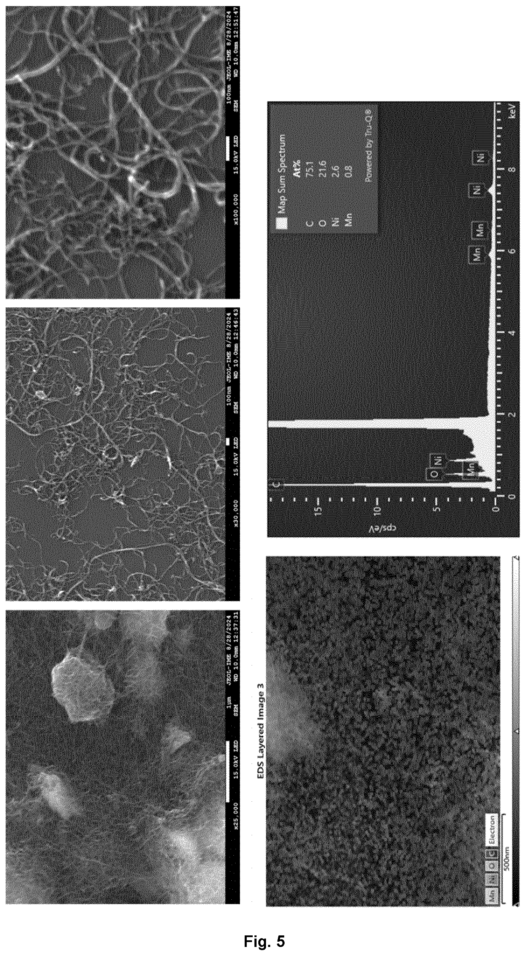

The Scanning Electron Microscopy (SEM) images and corresponding energy-dispersive X-ray spectroscopy (EDX) data presented illustrate the morphological and compositional characteristics of the NiMn-LDH-CNT composite. The SEM images **(****Figure 5****)** at various magnifications (25,000x, 30,000x, and 100,000x) reveal a complex network of CNTs thoroughly interwoven with NiMn-LDH. The high-resolution image at 100,000x magnification clearly shows the ultrafine structure of the intertwined CNTs and the layered morphology of NiMn-LDH, suggesting a successful integration of the two components which is likely to provide a high surface area and enhance electron mobility.

The EDX spectrum confirms the presence of carbon (C), oxygen (O), nickel (Ni), and manganese (Mn) in the composite. The composition shows a high carbon content at 75.1% atomic percent, which is indicative of a substantial CNT presence, aligning with the observed dense networks in the SEM images. Nickel and manganese are detected at 2.6% and 0.8% atomic percent respectively, which supports the integration of NiMn-LDH into the carbon matrix.

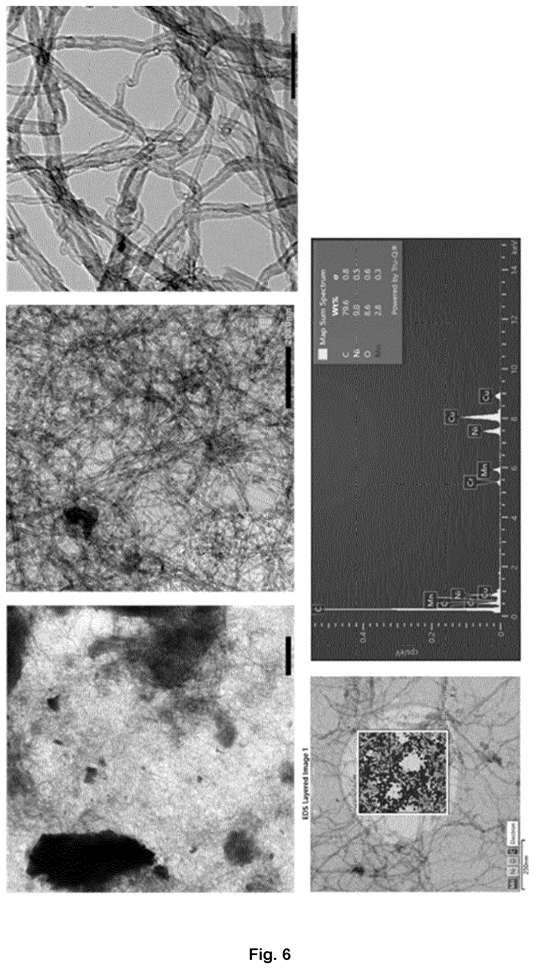

The Transmission Electron Microscopy (TEM) images and Energy-Dispersive X-ray Spectroscopy (EDS) data provide a detailed insight into the ultrastructural composition and elemental distribution of the NiMn-LDH-CNT composite (Figure 6). The TEM images at various scales clearly depict the intricate, web-like structure of the CNTs intertwined with finer particles and layers of NiMn-LDH. This arrangement suggests a highly porous network, favorable for enhancing surface-reactive properties due to the high accessibility of active sites. The EDS analysis confirms the elemental makeup of the composite, highlighting that nickel and manganese are present in amounts of 9% and 2.8% respectively, indicating their incorporation as active components within the predominantly carbon-based matrix. This composition is critical for the electrochemical functionality of the composite, as the metallic components (Ni and Mn) are essential for catalytic activity, while the carbon framework provides structural support and electrical conductivity. Additionally, the elemental mapping included in the EDS analysis visually demonstrates the homogeneity of the elemental distribution, which is crucial for consistent electrochemical performance across the material. The integration of NiMn-LDH with CNTs in this manner likely enhances both the electrical conductivity and the electrochemical activity, making this composite an excellent candidate for advanced electrode materials in applications such as energy storage and environmental remediation.

### Example 5. Electrochemical response of NiMn-LDH based anode with and without CNT

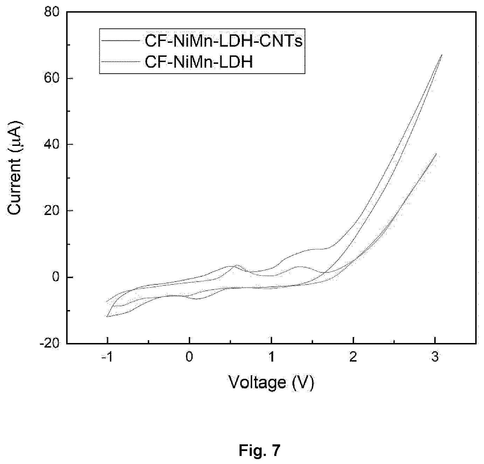

Cyclic voltammetry (CV) characterization was conducted in a three-electrode cell setup, employing a platinum mesh as the counter electrode, an Ag/AgCI electrode as the reference electrode, and 0.1 M Na₂SO₄ as the electrolyte. The working electrodes used were GF/NiMn-LDH and GF/NiMnLDH-CNT, respectively. The results of this analysis are presented in **Figure 7****.**

The redox activity of NiMn-LDH grown on CNTs is significantly enhanced, as evidenced in the graph where the black curve (GF/NiMn-LDH-CNT) exhibits higher current than the red curve (GF/NiMn-LDH) across a similar range of potentials. Both samples display two common redox peaks, the first appearing around 0.5 V and the second near 1.4 V. The first redox peak is attributed to the Ni²⁺/Ni³⁺ redox couple, while the second corresponds to the Mn³⁺/Mn⁴⁺ redox process. These redox peaks are indicative of the electrochemical activity of the NiMn-LDH material, with the redox behavior being more pronounced in the presence of CNTs. The enhancement observed in the GF/NiMn-LDH-CNT composite can be attributed to the unique properties of CNTs. Their excellent conductivity facilitates more efficient electron transport, thereby improving the utilization of active sites. Additionally, CNTs provide a high surface area and a strong structural support, which increases the availability of active sites and enhances the accessibility of reactants to these sites. The interaction between NiMn-LDH and CNTs results in a synergistic effect, reducing charge transfer resistance and promoting faster electrochemical kinetics.

### Example 6. The efficiency of various NiMn-LDH-based anode materials in the electrochemical removal of phenol from water under different current densities (0 to 20 mA cm⁻²).

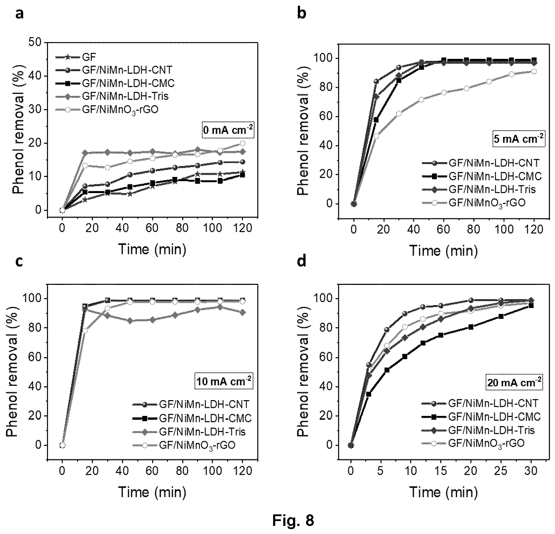

The results in terms of phenol are collected in **Figure 8****.** The electrodes tested include GF, GF/NiMn-LDH-CNT, GF/NiMn-LDH-CMC, GF/NiMn-LDH-Tris, and GF/NiMnO₃-rGO.

Across all the current densities, the GF/NiMn-LDH-CNT electrode exhibits superior performance in phenol removal efficiency. At 0 mA cm⁻², the removal rates are relatively lower for all materials, indicating the limited spontaneous adsorption capacity of these electrodes. However, as the current density increases the GF/NiMn-LDH-CNT consistently achieves higher phenol removal percentages in a shorter time, reaching nearly 100% removal at 10 mA cm⁻² and maintaining this efficiency at 20 mA cm⁻². In the experiments conducted at a current density of 20 mA cm⁻², the GF/NiMn-LDH-CNT electrode notably excels in the rapid removal of phenol, achieving complete removal within just 30 minutes. This remarkable efficiency highlights the effectiveness of the electrode material under higher operational currents, where the increased electron flow likely enhances the oxidative processes at the electrode surface. The swift removal rate is particularly significant for practical applications, as it demonstrates the potential for achieving high treatment efficiencies within short operational times, making the GF/NiMn-LDH-CNT composite an exceptionally promising candidate for the electrochemical treatment of wastewater. This capability to quickly remove pollutants not only improves the overall process efficiency but also reduces the energy and operational costs associated with longer treatment cycles. The enhanced performance of the GF/NiMn-LDH-CNT composite can be attributed to the synergistic effects of the carbon nanotubes and NiMn-LDH. CNTs provide a highly conductive network that facilitates efficient electron transfer, enhancing the electrocatalytic activity of the NiMn-LDH. Additionally, the high surface area and the mesoporous structure of the CNTs increase the available active sites for phenol adsorption and degradation. This combination results in a more effective and faster removal of organic pollutants, as demonstrated in the experiments, underscoring the potential of GF/NiMn-LDH-CNT as an advanced electrode material for wastewater treatment applications.

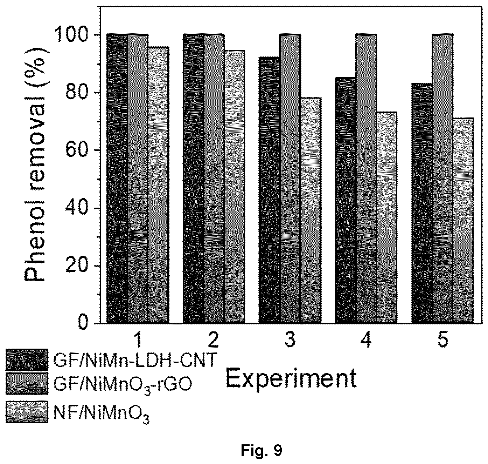

In the present invention, the stability of the NiMn-LDH-CNT electrode was tested through its application in the electrochemical oxidation of phenol in water across five consecutive experiments. This approach aimed to evaluate the electrode's ability to consistently remove phenol, thereby providing insights into its practical applicability for water treatment. The experiments were designed to assess not only the efficiency of phenol removal in each cycle but also to observe any potential degradation or loss of activity in the electrode material after repeated use. This methodological approach is crucial for determining the durability and reusability of such electrodes in real-world environmental applications. NiMn-LDH-CNT exhibits slight variability but generally remains within a close range throughout the experiments **(****Figure 9****).**

## Claims

1. An electrocatalytic material **characterized in that** it comprises
• a conductive carbon material as a support;
• a nickel-manganese layered double hydroxide deposited homogeneously over the support;
wherein the amount of conductive carbon material is between 10% and 15% in weight with respect to the nickel-manganese layered double hydroxide;
and wherein the ratio of nickel with respect the manganese in the layered double hydroxide is between 2.5:1 and 4:1, preferably 2.8:1 and 3.2:1.

2. Electrocatalytic material according to claim 1, wherein the conductive carbon material is selected from carbon nanotubes, graphene, reduced graphene oxide, carbon black, activated carbon, carbon fibers, carbon nanonions, carbon dots, mesoporous carbon, and carbon nanotubes with carboxylmethyl cellulose.

3. Electrocatalytic material according to claim 2, wherein the conductive carbon material is carbon nanotubes.

4. A process to obtain the electrocatalytic material described in any claims 1 to 3, **characterized in that** it comprises the following steps:
a) mixing a conductive carbon material with a 1.2 w/V% to 6 w/V% of H₂O₂ 30% solution;
b) oxidizing the mixture obtained in step (a), filtering and drying the oxidized conductive carbon material obtained;
c) mixing in a solution of methanol, preferably dry methanol, the metal precursors of Ni and Mn in a stoichiometric ratio of between 2.5:1 and 4:1 respect to Ni:Mn and then adding the oxidized conductive carbon material obtained in step (b) wherein the ratio of oxidized conductive carbon material is between 6:1 and 8:1 with respect to the nickel-manganese;
d) preparing a NaOH solution in methanol with a concentration ranging from 0.1 M to 6 M and adding it slowly to the mixture, preferably by dropwise technique, obtained in step (c) over a period of 2 to 100 minutes, followed by stirring the mixture for a minimum of 48 hours and the obtained dispersion is filtering; and
e) drying the powder obtained in step (d), preferably in a temperature of between 15 °C and 80 °C.

5. Process according to claim 4, wherein the conductive carbon material is selected from carbon nanotubes, graphene, reduced graphene oxide, carbon black, activated carbon, carbon fibers, carbon nano-onions, carbon dots mesoporous carbon, and carbon nanotubes with carboxymethyl cellulose, preferably the conductive carbon material is carbon nanotubes.

6. Process according to any of claims 4 or 5, wherein the oxidizing of step (b) is a treatment using a microwave furnace at 450 W during 6 minutes.

7. Process according to any claims 4 to 6, wherein the metal precursors of step (c) are Ni and Mn is in a stoichiometric ratio of between 2.8:1 and 3.2:1, preferably the precursor are halide salts, nitrate salts, sulfate salts.

8. Process according to any claims 4 to 7, wherein the ratio of oxidized conductive carbon material with respect to the nickel-manganese and the ratio of nickel-manganese is between 1:6.8 and 1:7.8.

9. An electrocatalytic device **characterized in that** it comprises:
• an electrocatalytic material according to any of claims 1 to 3 deposited on a graphite felt configured to act as an anode or negative electrode.

10. Process for obtainment of an electrocatalytic material deposited on a graphite felt described in claim 9 **characterized in that** it comprises the following steps:
i. cleaning a graphite felt;
ii. increasing the surface tension of the cleaned graphite felt obtained in step (i);
iii. oxidizing the graphite felt obtained in step (ii);
iv. impregnating the oxidated graphite felt obtained in step (iii), with the metal salts precursors of Ni and Mn in a stoichiometric ratio of between 2.5:1 and 4:1, preferably metal salt precursors are selected from halide salts, nitrate salts, sulfate salts, and optionally further adding a conductive carbon material;
v. adding the precipitating agent to the mixture obtained in step (iv) in an amount of at least 2 times the stoichiometric amount of the metals present in the mixture, preferably the precipitation agent is selected from NaOH and Glycidol;
vi. rinsing of excess powder obtained in step (v) with at least twice a volume of polar solvent, preferably water, with respect to the total volume obtained in step (v) and drying, preferably in a temperature of between 15 °C and 80 °C.

11. Process according to claim 10, wherein the cleaning of step (i) is carried out by washing with a polar solvent selected from methanol or acetone.

12. Process according to any of claims 10 or 11, wherein increasing the surface tension of step (ii) is carried out by a corona treatment.

13. Process according to any of claims 10 to 12, wherein the oxidizing of step (iii) is carried out by immersing in H₂O₂ and irradiating for 3-6 minutes at 450W in a microwave.

14. Use of the electrocatalytic material described in any claims 1 to 3 or the electrode described in claim 9, as an anode in an electrochemical oxidation process of wastewater for the removal and degradation of their organic pollutants, preferably the organic pollutant is phenol.

15. Method for wastewater treatment **characterized in that** it comprises the following steps:
1) contacting the electrochemical device described in claim 9, in a medium comprising waste water;
2) applying a current density of between 5 and 20 mA·cm²;
3) sampling of the water to be treated for intervals between 2.5 and 20 min;
4) analyzing the evolution of the samples of step (3) of the phenol concentration and the chemical oxygen demand (COD); and
5) optionally cleaning by keeping the device and the anode immersed in milliQ water for at least 1 h.
